(19) Europäisches Patentamt
European Patent Office
Office européen des brevets

(11) EP 4 657 591 A1

(12) EUROPEAN PATENT APPLICATION

(43) Date of publication:
**03.12.2025 Bulletin 2025/49**

(21) Application number: **25178755.2**

(22) Date of filing: **26.05.2025**

(51) International Patent Classification (IPC):
***H01M 10/0567*** *(2010.01)*

(52) Cooperative Patent Classification (CPC):
**H01M 10/0567;** H01M 10/0525; H01M 10/0568; H01M 10/0569

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.05.2024 KR 20240070491**

(71) Applicant: **SAMSUNG SDI CO., LTD.**
**Yongin-si, Gyeonggi-do 17084 (KR)**

(72) Inventors:
- **KIM, Myunghoon**
  **17084 Yongin-si, Gyeonggi-do (KR)**
- **KIM, Aeran**
  **17084 Yongin-si, Gyeonggi-do (KR)**
- **OH, Seungryong**
  **17084 Yongin-si, Gyeonggi-do (KR)**
- **KIM, Dahyun**
  **17084 Yongin-si, Gyeonggi-do (KR)**
- **SHIN, Jeongmin**
  **17084 Yongin-si, Gyeonggi-do (KR)**
- **KIM, Sanghoon**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE SOLUTION FOR RECHARGEABLE LITHIUM BATTERY

(57) Disclosed are an electrolyte solution for a rechargeable lithium battery. The electrolyte solution for the rechargeable lithium battery includes a non-aqueous organic solvent, a lithium salt, a first compound and a second compound.

EP 4 657 591 A1

## Description

BACKGROUND

Examples of the present disclosure relate to an electrolyte solution for a rechargeable lithium battery.

Recently, with the increasing use of electronic devices that use batteries such as, e.g., mobile phones, laptop computers, electric vehicles, and the like, the demand for rechargeable batteries with high energy density and high capacity is rapidly increasing.

A rechargeable lithium battery is typically a battery including a positive electrode and a negative electrode, and containing active materials capable of intercalation and deintercalation of lithium ions, and an electrolyte. The rechargeable lithium battery produces electrical energy through oxidation and reduction reactions when lithium ions are intercalated into and deintercalated from the positive electrode and the negative electrode.

SUMMARY

The invention is defined by the appended claims. The description that follows is subjected to this limitation. Any disclosure lying outside the scope of said claims is only intended for illustrative as well as comparative purposes.

An example embodiment of the present disclosure includes an electrolyte solution for a rechargeable lithium battery having desired or improved lifetime characteristics at high temperatures, storage properties and stability.

Another example embodiment of the present disclosure includes a rechargeable lithium battery including the electrolyte solution for a rechargeable lithium battery.

The electrolyte solution for a rechargeable lithium battery includes a non-aqueous organic solvent, a lithium salt, a first compound represented by Chemical Formula 1, and a second compound represented by Chemical Formula 2.

Chemical Formula 1:

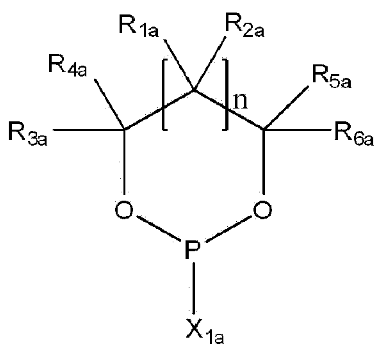

[Chemical Formula 2]

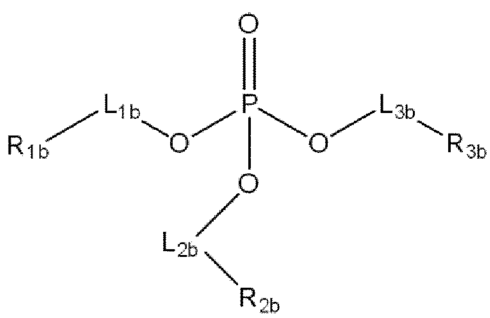

In Chemical Formula 1,

$X_{1a}$ is one of a fluoro group, a chloro group, a bromo group, and an iodo group,
$R_{1a}$ to $R_{6a}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a

substituted or unsubstituted C3 to C20 cycloalkynyl group, a substituted or unsubstituted C6 to C30 aryl group, a substituted or unsubstituted C1 to C10 alkoxy group, and a substituted or unsubstituted C2 to C30 heterocyclic group, and
"n" is an integer of 0 or 1.

In Chemical Formula 2,

$L_{1b}$ to $L_{3b}$ are each independently a single bond or a substituted or unsubstituted C1 to C10 alkylene group, and
$R_{1b}$ to $R_{3b}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, and a substituted or unsubstituted C2 to C30 heterocyclic group.

Another example embodiment includes a rechargeable lithium battery including a positive electrode including a positive electrode active material, a negative electrode including a negative electrode active material and the electrolyte solution for a rechargeable lithium battery.

## BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure.

FIG. 1 is a simplified conceptual diagram illustrating a rechargeable lithium battery according to some example embodiments of the present disclosure.
FIGS. 2 to 5 are simplified cross-sectional views illustrating rechargeable lithium batteries according to some example embodiments.

## DETAILED DESCRIPTION

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.
In the description, it will be understood that, when an element is referred to as being "on" another element, the element can be directly on the other element, or intervening elements may be present between therebetween. In the drawings, thicknesses of some components are exaggerated for effectively explaining the technical contents. Like reference numerals refer to like elements throughout the specification.
Unless otherwise specially noted in the description, the expression of singular form may include the expression of plural form. In addition, unless otherwise specially noted, the phrase "A or B" may indicate "A but not B," "B but not A," and "A and B." The terms "comprises/includes" and/or "comprising/including" used in the description do not exclude the presence or addition of one or more other components.
As used herein, the term "combination thereof" may refer to a mixture, a stack, a composite, a copolymer, an alloy, a blend, or a reaction product.
Unless otherwise specially defined in the description, a particle diameter may be an average particle diameter. Also, a particle diameter may mean an average particle diameter (D50), which refers to the diameter of particles at a cumulative volume of 50 vol% in particle size distribution. The average particle diameter (D50) may be measured by a method widely known to those skilled in the art, for example, by a particle size analyzer, or by using a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the laser scattering method, target particles are dispersed in a dispersion medium, subsequently introduced into a commercial laser diffraction particle-diameter measurement instrument (e.g., MT3000 of Microtrac), and irradiated to ultrasonic waves of 28 kHz at an output of 60 W, and the average particle diameter (D50) based on 50% of particle diameter distribution may be calculated in the measurement instrument.

In the description, unless otherwise defined, "substitution" means that at least one hydrogen in a substituent or compound is substituted with deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

For example, the "substitution" may mean that at least one hydrogen in a substituent or compound is substituted with deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the "substitution" may mean that at least one hydrogen in a substituent or compound is substituted with deuterium, a halogen group, a C1 to C20 alkyl group, a C6 to C30 aryl group, a C1 to C10 fluoroalkyl group, or a cyano group. Also, the "substitution" may mean that at least one hydrogen in a substituent or compound is substituted with deuterium, a halogen group, a C1 to C5 alkyl group, a C6 to C18 aryl group, a C1 to C5 fluoroalkyl group, or a cyano group. For example, the "substitution" may mean that at least one hydrogen in a substituent or compound is substituted with deuterium, a cyano group, a halogen group, a methyl group, an ethyl group, a propyl group, a butyl group, a phenyl group, a biphenyl group, a terphenyl group, a trifluoromethyl group, or a naphthyl group.

In the description, unless otherwise defined, an "alkyl group" means a linear or branched chain type aliphatic hydrocarbon group. The alkyl group may be or include a "saturated alkyl group" unless including any double bonds or triple bonds.

In the description, unless otherwise defined, an "alkenyl group" is a linear or branched chain type aliphatic hydrocarbon group, and may mean an aliphatic unsaturated alkenyl group including one or more double bonds.

In the description, unless otherwise defined, an "alkynyl group" is a linear or branched chain type aliphatic hydrocarbon group, and may mean or include an aliphatic unsaturated alkynyl group including one or more triple bonds.

FIG. 1 is a simplified conceptual diagram of a rechargeable lithium battery according to some example embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for a rechargeable lithium battery may include a current collector COL1 and a positive electrode active material layer AML1 on the current collector COL1. The positive electrode active material layer AML1 may include a positive electrode active material, and may further include a binder and/or a conductive material.

In an example embodiment, the positive electrode 10 may further include an additive that may constitute a sacrificial positive electrode.

The content of the positive electrode active material in the positive electrode active material layer AML1 may range from 90 wt% to 99.5 wt% on the basis of 100 wt% of the positive electrode active material layer AML1. The contents of the binder and the conductive material may be 0.5 wt% to 5 wt% on the basis of 100 wt% of the positive electrode active material layer AML1.

The binder may improve attachment of positive electrode active material particles to each other, and to improve attachment of the positive electrode active material to the current collector COL1. An example of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material is configured to provide an electrode with conductivity, and any suitable conductive materials that does not cause chemical change of a battery may be or include the conductive material to constitute the battery. The conductive material may include, for example, a carbon-based material such as at least one of natural graphite, artificial graphite, carbon black, acetylene black, Ketjen black, carbon fiber, carbon nano-fiber, and carbon nanotube, a metal-based material with a metal powder or metal fiber type, containing at least one of copper, nickel, aluminum, silver or the like, a conductive polymer such as a polyphenylene derivative, or a mixture thereof.

Al may be the current collector COL1, but an example embodiment of the inventive concept is not limited thereto.

**Positive Electrode Active Material**

The positive electrode active material in the positive electrode active material layer AML1 may include a compound (e.g., lithiated intercalation compound) that may reversibly intercalate and de-intercalate lithium. For example, the positive electrode active material may use at least one type of the composite oxide of lithium and metal that is or includes at least one of cobalt, manganese, nickel, and a combination thereof.

The composite oxide may include a lithium transition metal composite oxide, for example, at least one of a lithium nickel-based oxide, lithium cobalt-based oxide, lithium manganese-based oxide, lithium iron phosphate-based compound, cobalt-free nickel manganese-based oxide, or a combination thereof.

For example, the positive electrode active material may include a compound represented by any one of chemical formulae below. $Li_aA_{1-b}X_bO_{2-c}D_c$ (0.90≤a≤1.8, 0≤b≤0.5, 0≤c≤0.05), $Li_aMn_{2-b}X_bO_{4-c}D_c$ (0.90≤a≤1.8, 0≤b≤0.5,0≤c≤0.05), $Li_aNi_{1-b-c}Co_bX_cO_{2-\alpha}D_\alpha$ (0.90≤a≤1.8, 0≤b≤0.5,0≤c≤0.5, 0<α<2), $Li_aNi_{1-b-c}Mn_dX_cO_{2-\alpha}D_\alpha$ (0.90≤a≤1.8, 0≤b≤0.5, 0≤c≤0.5, 0<α<2), $Li_aNi_bCo_cL^1_dGeO_2$ (0.90≤a≤1.8, 0≤b≤0.9, 0≤c≤0.5, 0≤d≤0.5, 0≤e≤0.1), $Li_aNiG_bO_2$ (0.90≤a≤1.8, 0.001≤b≤0.1), $Li_aCoG_bO_2$ (0.90≤a≤1.8, 0.001≤b≤0.1), $Li_aMn_{1-b}G_bO_2$ (0.90≤a≤1.8, 0.001≤b≤0.1), $Li_aMn_2G_bO_4$ (0.90≤a≤1.8, 0.001≤b≤0.1), $Li_aMn_{1-g}G_gPO_4$ (0.90≤a≤1.8, 0≤g≤0.5), $Li_{(3-f)}Fe_2(PO_4)_3$ (0≤f≤2), and $Li_aFePO_4$ (0.90≤a≤1.8).

In the chemical formulae above, A is or includes at least one of Ni, Co, Mn, or a combination thereof, X is or includes at least one of Al, Ni, Co, Mn, Cr, Fe, Mg, Sr, V, a rare element, or a combination thereof, D is or includes at least one of O, F, S, P, or a combination thereof, G is or includes at least one of Al, Cr, Mn, Fe, Mg, La, Ce, Sr, V, or a combination thereof, and $L^1$ is or includes at least one of Mn, Al, or a combination thereof.

For example, the positive electrode active material may be or include a high nickel-based positive electrode active material having the nickel content of 80 mol% or more, 85 mol% or more, 90 mol% or more, 91 mol% or more, or 94 mol% or more, and 99 mol% or less on the basis of 100 mol% of metals excluding lithium in a lithium transition metal composite oxide. The high nickel-based positive electrode active material may achieve high capacity and thus may be applied to a high-capacity and high-density rechargeable lithium battery.

**Negative Electrode 20**

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material.

For example, the negative electrode active material layer AML2 may include 90 wt% to 99 wt% of the negative electrode active material, 0.5 wt% to 5 wt% of the binder, and 0 wt% to 5 wt% of the conductive material.

The binder may attach the negative electrode active material particles to each other, and to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity to an electrode. Any material that does not cause chemical change and is an electron conductive material in a battery may be used. Examples of the conductive material may include a carbon-based material such as at least one of natural graphite, artificial graphite, carbon black, acetylene black, Ketjen black, a carbon fiber, a carbon nanofiber, and carbon nanotube; a metal-based material including copper, nickel, aluminum, silver, etc., in a form of a metal powder or a metal fiber; a conductive polymer such as a polyphenylene derivative; or a mixture thereof.

The current collector COL2 may be or include at least one of a copper foil, a nickel foil, a stainless steel foil, a titanium foil, a nickel foam, a copper foam, a polymer substrate coated with a conductive metal, or a combination thereof.

## Negative Electrode Active Material

The negative electrode active material in the negative electrode active material layer AML2 may include a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of soft carbon, hard carbon, a mesophase pitch carbide product, calcined coke, and the like.

The lithium metal alloy includes an alloy of lithium with a metal that includes at least one of Na, K, Rb, Cs, Fr, Be, Mg, Ca, Sr, Si, Sb, Pb, In, Zn, Ba, Ra, Ge, Al, and Sn.

The material capable of doping lithium into and de-doping from lithium may be or include a Si-based negative electrode active material or a Sn-based negative electrode active material. The Si-based negative electrode active material may include at least one of silicon, a silicon-carbon composite, SiOx ($0<x<2$), a Si-Q alloy (where Q is or includes at least one of an alkali metal, an alkaline earth metal, a Group 13 element, a Group 14 element (except for Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to an example embodiment, the silicon-carbon composite may be in a silicon particle form or a silicon particle coated with amorphous carbon on the surface thereof. For example, the silicon-carbon composite may include a secondary particle (core), in which primary silicon particles are assembled, and an amorphous carbon coating layer (shell) positioned on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material, or the Sn-based negative electrode active material, may be used in combination with a carbon-based negative electrode active material.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer of two or more thereof, and may also include a mixed multilayer such as a polyethylene/polypropylene two-layer separator, a polyethylene/polypropylene/polyethylene three-layer separator, a polypropylene/polyethylene/polypropylene three-layer separator or the like.

The separator 30 may include a porous substrate and a coating layer including an organic material, an inorganic material, or a combination thereof, on one or both surfaces of the porous substrate.

The porous substrate may be or include a polymer film formed of or including any one polymer that includes at least one of polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but an example embodiment of the present disclosure is not limited thereto.

The organic material and the inorganic material may be mixed in one coating layer, or in a stacked form of a coating layer including an organic material and a coating layer including an inorganic material.

## Electrolyte Solution ELL

The electrolyte solution ELL for a rechargeable lithium battery includes a non-aqueous organic solvent, a lithium salt and an electrolyte solution additive.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methyl propyl carbonate (MPC), ethyl propyl carbonate (EPC), ethyl methyl carbonate (EMC), ethylene carbonate (EC), propylene carbonate (PC), butylene carbonate (BC), or the like.

The ester-based solvent may include at least one of methyl acetate, ethyl acetate, n-propyl acetate, dimethyl acetate, methyl propionate, ethyl propionate, propyl propionate (PP), decanolide, mevalonolactone, valerolactone, caprolactone, or the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. In addition, the ketone-based solvent may include cyclohexanone, or the like. The alcohol-based solvent may include at least one of ethyl alcohol, isopropyl alcohol, or the like, and the aprotic solvent may include nitriles such as R-CN (wherein R is a C2 to C20 linear, branched, or cyclic hydrocarbon group, and may include a double bond, an aromatic ring, or an ether bond); amides such as dimethylformamide; dioxolanes such as 1,3-dioxolane, and 1,4-dioxolane; sulfolanes, or the like.

The non-aqueous organic solvents may be used alone or in combination of two or more thereof.

In addition, when using a carbonate-based solvent, a cyclic carbonate and a chain carbonate may be mixed, and the cyclic carbonate and the chain carbonate may be mixed in a volume ratio of 1:1 to 1:9.

The lithium salt dissolved in the organic solvent supplies lithium ions in a battery, enables a basic operation of a rechargeable lithium battery, and improves the transportation of the lithium ions between the positive electrode and the negative electrode. Typical examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato) phosphate (LiBOB), and lithium bis(oxalato) borate (LiBOB).

The concentration of the lithium salt may be in a range of 0.1 M and 2.0 M. When the concentration of the lithium salt is within the above range, the electrolyte solution may have appropriate conductivity and viscosity, desired or improved electrolyte performance may be achieved, and lithium ions may move more effectively.

Hereinafter, the electrolyte solution of a rechargeable lithium battery according to an example embodiment will be explained.

The electrolyte solution for a rechargeable lithium includes a non-aqueous organic solvent, a lithium salt, a first compound represented by Chemical Formula 1, and a second compound represented by Chemical Formula 2.

The first compound is represented by Chemical Formula 1 below.

Chemical Formula 1:

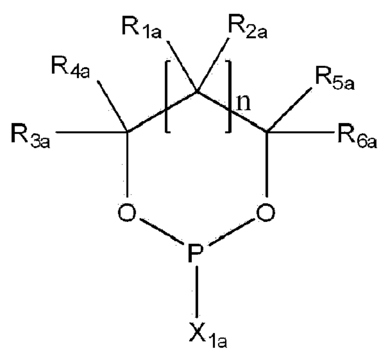

In Chemical Formula 1,

$X_{1a}$ is one of a fluoro group (-F), a chloro group (-Cl), a bromo group (-Br), and an iodo group (-I). For example, $X_{1a}$ may be a fluoro group (-F).

$R_{1a}$ to $R_{6a}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, a

substituted or unsubstituted C1 to C10 alkoxy group, and a substituted or unsubstituted C2 to C30 heterocyclic group. "n" is an integer of 0 or 1.

The first compound represented by Chemical Formula 1 may form a solid electrolyte interface (SEI) having high stability and desired or improved ion conductivity on the surface of the negative electrode, reduce or suppress side reactions of the lithium salt due to a $-PO_2F$ functional group, and reduce or suppress resistance increase due to the decomposition reaction of the electrolyte solution when stored at high temperatures.

For example, the first compound may be coordinated with the thermal decomposition product of a lithium salt such as $LiPF_6$ or anions dissociated from the lithium salt to form a composite, and due to the formation of the composite, the thermal decomposition product of the lithium salt or the anions dissociated from the lithium salt may be stabilized, and undesired side reactions with the electrolyte solution may be reduced or suppressed. Accordingly, the lifecycle characteristics of a rechargeable lithium battery may be improved, and the increase of resistance in the rechargeable lithium battery may be reduced or prevented, thereby markedly reducing defect generation and markedly improving high-temperature storage properties.

In an example embodiment, Chemical Formula 1 may be represented by Chemical Formula 1-1 or Chemical Formula 1-2.

Chemical Formula 1-1:

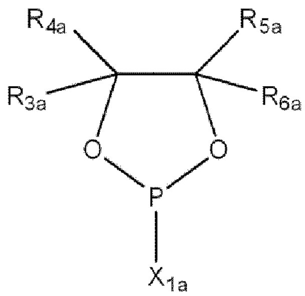

Chemical Formula 1-2:

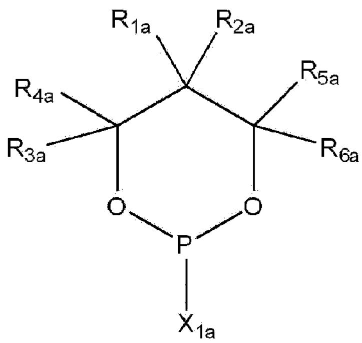

In Chemical Formula 1-1 and Chemical Formula 1-2,

$X_{1a}$ is one of a fluoro group, a chloro group, a bromo group, and an iodo group.
$R_{1a}$ to $R_{6a}$ are each independently at least one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, a substituted or unsubstituted C1 to C10 alkoxy group, and a substituted or unsubstituted C2 to C30 heterocyclic group.

In an example embodiment, in Chemical Formula 1-1 and Chemical Formula 1-2, $R_{1a}$, $R_{2a}$, $R_{3a}$ and $R_{4a}$ may each be hydrogen, and at least one of $R_{5a}$ and $R_{6a}$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In an example embodiment, the first compound represented by Chemical Formula 1 may be at least one of the

compounds listed in Group 1 below, i.e. one of 2-fluoro-1,3,2-dioxaphospholane and 2-fluoro-4-methyl-1,3,2-dioxaphospholane.

[Group 1]

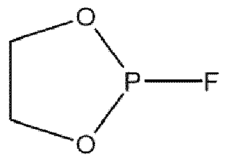 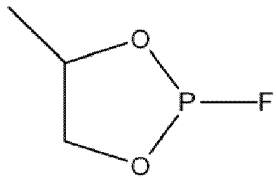

The first compound may be included in 0.01 to 5 wt% based on the total weight of the electrolyte solution for a rechargeable lithium battery. For example, the first compound may be included in 0.1 to 5 wt%, 0.5 to 5 wt%, 0.5 to 3 wt%, or 0.5 to 2 wt%. In this case, the rechargeable lithium battery including the electrolyte solution may show desired or improved high-temperature storage properties and lifetime characteristics.

The second compound is represented by Chemical Formula 2.

[Chemical Formula 2]

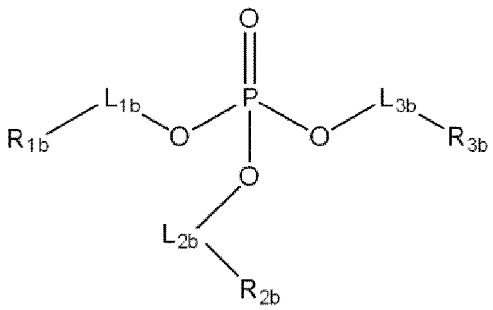

In Chemical Formula 2,

$L_{1b}$ to $L_{3b}$ are each independently a single bond or a substituted or unsubstituted C1 to C10 alkylene group.

$R_{1b}$ to $R_{3b}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, and a substituted or unsubstituted C2 to C30 heterocyclic group.

The second compound represented by Chemical Formula 2 includes a phosphate-based compound and may reduce or suppress Ni cations derived from the positive electrode from eluting into the electrolyte solution. Accordingly, the second compound may reduce or suppress the deterioration of lifetime characteristics and increase in resistance due to the decomposition reaction of the electrolyte solution when the rechargeable lithium battery is stored at high temperatures.

For example, the phosphate-based compound has high affinity with Ni cations, and as a result, a reducing or suppressing effect on the side reactions of Ni cations may be achieved. For example, high affinity with Ni cations may be maintained even though the battery is operated at high voltages, and as a result, the elution, oxidation and disproportionation of Ni cations may be reduced or suppressed.

In an example embodiment, Chemical Formula 2 may be represented by Chemical Formula 2-1.

[Chemical Formula 2-1]

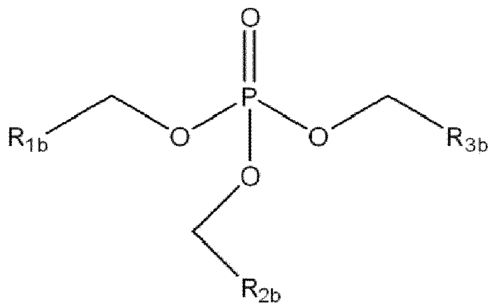

In Chemical Formula 2-1,

$R_{1b}$ to $R_{3b}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, and a substituted or unsubstituted C2 to C30 heterocyclic group.

In an example embodiment, in Chemical Formula 2-1, $R_{1b}$ to $R_{3b}$ may each be independently a substituted or unsubstituted C1 to C20 alkenyl group, or a substituted or unsubstituted C2 to C20 alkynyl group.

In an example embodiment, Chemical Formula 2 may be represented by Chemical Formula 2-1-1.

[Chemical Formula 2-1-1]

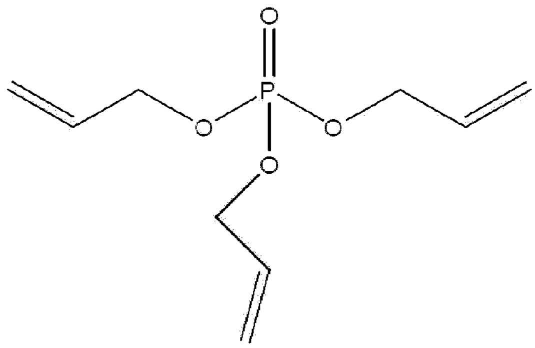

In an example embodiment, Chemical Formula 2 may be represented by Chemical Formula 2-1-2.

[Chemical Formula 2-1-2]

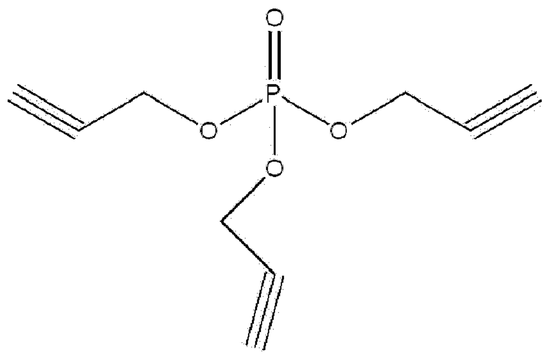

The second compound may be included in 0.01 to 20 wt% based on the total weight of the electrolyte solution for a

rechargeable lithium battery. For example, the second compound may be included in 0.5 to 20 wt%, 1 to 20 wt%, 1.5 to 20 wt%, 2 to 20 wt%, 3 to 20 wt%, 5 to 20 wt%, 10 to 20 wt%, or 10 to 15 wt%. In this case, the rechargeable lithium battery including the electrolyte solution may show desired or improved high-temperature storage properties and lifetime properties.

The electrolyte solution for a rechargeable lithium battery according to an example embodiment may include the first compound and the second compound in a weight ratio of 1:0.2 to 1:20. For example, the first compound and the second compound may be included in a weight ratio of 1:1 to 1:20, or in a weight ratio of 1:5 to 1:15. When any of the above ranges are satisfied, the rechargeable lithium battery including the electrolyte solution, may show desired or improved high-temperature storage properties and lifetime properties.

## Rechargeable Lithium Battery

The rechargeable lithium battery may be classified into cylindrical, prismatic, pouch, or coin-type batteries depending on their shape. FIGS. 2 to 5 are schematic views illustrating rechargeable lithium batteries according to some example embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 accommodating the electrode assembly 40. The positive electrode 10, the negative electrode 20, and the separator 30 may be immersed in an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4 and 5, the rechargeable lithium battery 100 may include an electrode tab 70 illustrated in FIG. 4, that is, a positive electrode tab 71 and a negative electrode tab 72 illustrated in FIG. 5, which form an electrical path for inducing the current formed in the electrode assembly 40 to the outside of the battery 100.

The rechargeable lithium battery according to an example embodiment of the present disclosure may be applicable to automobiles, mobile phones, and/or various types of electric devices, but an example embodiment of the present disclosure is not limited thereto.

Hereinafter, Examples and Comparative Examples in the present disclosure will be described. However, the Examples are only embodiments of the present disclosure, and the present disclosure is not limited to the Examples below.

## Examples and Comparative Examples

Electrolyte solutions and rechargeable lithium batteries were obtained as discussed below.

## Example 1

### (1) Preparation of Electrolyte Solution

In a non-aqueous organic solvent in which ethylene carbonate (EC), ethyl methyl carbonate (EMC) and dimethyl carbonate (DMC) were mixed in a volume ratio of 20:10:70, 1.5 M of $LiPF_6$ was dissolved, and an additive was added thereto to prepare an electrolyte solution.

The additive was prepared by mixing 1 wt% of the first compound represented by Chemical Formula 1-1 below on the basis of total 100 wt% of the electrolyte solution, and 0.5 wt% of the second compound represented by Chemical Formula 2-1-1 below on the basis of total 100 wt% of the electrolyte solution.

[Chemical Formula 1-1]

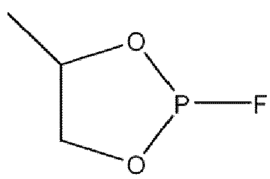

[Chemical Formula 2-1-1]

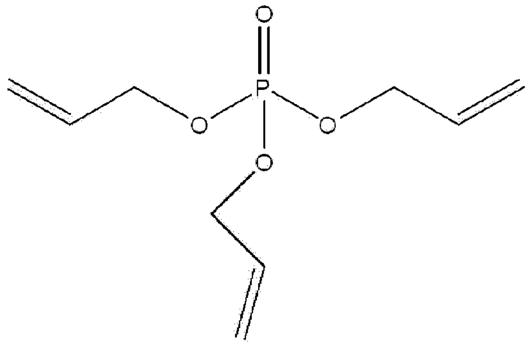

(2) Fabrication of Rechargeable Lithium Battery

$LiNi_{0.88}Co_{0.07}Al_{0.05}O_2$ as a positive electrode active material, polyvinylidene fluoride as a binder, and Ketjen black as a conductive material were mixed in a weight ratio of 97:2:1 and dispersed in N-methyl pyrrolidone to prepare a positive electrode active material slurry.

The positive electrode active material slurry was applied on an Al foil with a thickness of 14 μm, dried at 110°C and pressed to manufacture a positive electrode.

A mixture of artificial graphite and a Si-C composite in a weight ratio of 93:7 was used as a negative electrode active material, and the negative electrode active material, a styrene-butadiene rubber binder, and a carboxymethyl cellulose thickening agent were mixed in a weight ratio of 97:1:2, and dispersed in distilled water to prepare a negative electrode active material slurry.

The Si-C has a shape including a core containing artificial graphite and silicon particles, and coal-based pitch coated on the surface of the core.

The negative electrode active material slurry was applied on a Cu foil with a thickness of 10 μm, dried at 100°C and pressed to manufacture a negative electrode.

The positive electrode and the negative electrode thus manufactured, and a separator of a polyethylene material with a thickness of about 25 μm were assembled to fabricate an electrode assembly, and an electrolyte solution was injected to fabricate a rechargeable lithium battery.

## Example 2

A rechargeable lithium battery was fabricated by the same method as in Example 1 with a difference in preparing the additive by mixing the second compound in 1 wt% on the basis of total 100 wt% of the electrolyte solution.

## Example 3

A rechargeable lithium battery was fabricated by the same method as in Example 1 with a difference in preparing the additive by mixing the second compound in 1.5 wt% on the basis of total 100 wt% of the electrolyte solution.

## Example 4

A rechargeable lithium battery was fabricated by the same method as in Example 1 with a difference in preparing the additive by mixing the second compound in 2 wt% on the basis of total 100 wt% of the electrolyte solution.

## Example 5

A rechargeable lithium battery was fabricated by the same method as in Example 1 with a difference in preparing the additive by mixing the second compound in 3 wt% on the basis of total 100 wt% of the electrolyte solution.

## Example 6

A rechargeable lithium battery was fabricated by the same method as in Example 1 with a difference in preparing the additive by mixing the second compound in 5 wt% on the basis of total 100 wt% of the electrolyte solution.

**Example 7**

A rechargeable lithium battery was fabricated by the same method as in Example 1 with a difference in preparing the additive by mixing the second compound in 10 wt% on the basis of total 100 wt% of the electrolyte solution.

**Example 8**

A rechargeable lithium battery was fabricated by the same method as in Example 1 with a difference in preparing the additive by mixing 1 wt% of the first compound represented by Chemical Formula 1-1 above on the basis of total 100 wt% of the electrolyte solution, and 0.5 wt% of the second compound represented by Chemical Formula 2-1-2 below on the basis of total 100 wt% of the electrolyte solution.

[Chemical Formula 2-1-2]

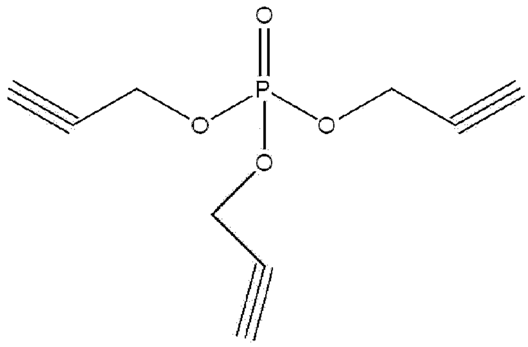

**Example 9**

A rechargeable lithium battery was fabricated by the same method as in Example 8 with a difference in preparing the additive by mixing the second compound in 1 wt% on the basis of total 100 wt% of the electrolyte solution.

**Example 10**

A rechargeable lithium battery was fabricated by the same method as in Example 8 with a difference in preparing the additive by mixing the second compound in 1.5 wt% on the basis of total 100 wt% of the electrolyte solution.

**Example 11**

A rechargeable lithium battery was fabricated by the same method as in Example 8 with a difference in preparing the additive by mixing the second compound in 2 wt% on the basis of total 100 wt% of the electrolyte solution.

**Example 12**

A rechargeable lithium battery was fabricated by the same method as in Example 8 with a difference in preparing the additive by mixing the second compound in 3 wt% on the basis of total 100 wt% of the electrolyte solution.

**Example 13**

A rechargeable lithium battery was fabricated by the same method as in Example 8 with a difference in preparing the additive by mixing the second compound in 5 wt% on the basis of total 100 wt% of the electrolyte solution.

**Example 14**

A rechargeable lithium battery was fabricated by the same method as in Example 8 with a difference in preparing the additive by mixing the second compound in 10 wt% on the basis of total 100 wt% of the electrolyte solution.

## Example 15

A rechargeable lithium battery was fabricated by the same method as in Example 8 with a difference in preparing the additive by mixing the second compound in 13 wt% on the basis of total 100 wt% of the electrolyte solution.

## Example 16

A rechargeable lithium battery was fabricated by the same method as in Example 8 with a difference in preparing the additive by mixing the second compound in 15 wt% on the basis of total 100 wt% of the electrolyte solution.

## Example 17

A rechargeable lithium battery was fabricated by the same method as in Example 9 with a difference in preparing the additive by mixing the first compound in 0.5 wt% on the basis of total 100 wt% of the electrolyte solution.

## Example 18

A rechargeable lithium battery was fabricated by the same method as in Example 9 with a difference in preparing the additive by mixing the first compound in 2 wt% on the basis of total 100 wt% of the electrolyte solution.

## Example 19

A rechargeable lithium battery was fabricated by the same method as in Example 9 with a difference in preparing the additive by mixing the first compound in 3 wt% on the basis of total 100 wt% of the electrolyte solution.

## Comparative Example 1

A rechargeable lithium battery was fabricated by the same method as in Example 1 with a difference in preparing an electrolyte solution without mixing an additive.

## Comparative Example 2

A rechargeable lithium battery was fabricated by the same method as in Example 1 with a difference that the second compound was not mixed as an additive.

## Comparative Example 3

A rechargeable lithium battery was fabricated by the same method as in Example 1 with a difference that the first compound was not mixed as an additive.

## Evaluation Example 1: Charge and Discharge Properties at High Temperature (DCIR, @60°C, 500 cycles)

The rechargeable lithium batteries fabricated according to Examples 1 to 19 and Comparative Examples 1 to 3 were charged and discharged for 500 cycles at 60°C, at 2.5 V to 4.5 V with 0.5 C C-rate. Direct current internal resistance (DCIR, mΩ) was measured as a value of $\Delta V/\Delta I$ (change in voltage/change in current). The results are shown in Tables 1 and 2 below.

## Evaluation Example 2: Storage Properties at High Temperature (DCIR, @60°C, 30 days)

With respect to the rechargeable lithium batteries fabricated according to Examples 1 to 19 and Comparative Examples 1 to 3, initial direct current internal resistance (DCIR) was measured as a value of $\Delta V/\Delta I$ (change in voltage/change in current). The maximum energy state in the battery was set to a fully charged state (state of charge SOC of 100%), stored at a high temperature (about 60°C) for 30 days, and the DCIR was measured. A DCIR increase ratio (%) was calculated according to Equation 1 below, and the results are shown in Tables 1 and 2 below.

Equation 1:

$$\text{DCIR increase ratio} = \{\text{DCIR after 30 days/initial DCIR-1}\} \text{ X } 100\ (\%)$$

**Evaluation Example 3: Evaluation of Stability at High Temperature (CID open time, @90°C)**

For the rechargeable lithium batteries fabricated according to Examples 1 to 19 and Comparative Examples 1 to 3, charge/discharge with 0.2 C/0.5 C was performed twice, standard charge/discharge current density was set to 0.5 C/0.2 C, and a charge/discharge experiment was performed once each with a charge termination voltage of 4.25 V and a discharge termination voltage of 2.5 V. After leaving in a chamber of about 90°C for about 140 hours, current interrupt device (CID) operating time was measured, and the results are shown in Tables 1 and 2 below.

The evaluation results on high-temperature charge/discharge properties, high-temperature storage properties, and stability for the rechargeable lithium batteries fabricated according to Examples 1 to 7 and Comparative Examples 1 and 2 are shown in Table 1 below.

Table 1

| | Additive | | 500 cycles, DCIR increase ratio (mΩ, @500) | High-temperature storage, DCIR increase ratio (%, @60°C 30 days) | High-temperatur e storage, CID open time (hr, @90°C) |
|---|---|---|---|---|---|
| | First compound (wt%) | Second compound * (wt%) | | | |
| Example 1 | 1 | 0.5 | 77.5 | 40.6 | 46 |
| Example 2 | 1 | 1 | 75.6 | 38.5 | 51 |
| Example 3 | 1 | 1.5 | 72.3 | 36.9 | 55 |
| Example 4 | 1 | 2 | 70 | 33.3 | 61 |
| Example 5 | 1 | 3 | 66.9 | 29.1 | 72 |
| Example 6 | 1 | 5 | 65.5 | 25.6 | 89 |
| Example 7 | 1 | 10 | 58.8 | 19.5 | 106 |
| Comparative Example 1 | 0 | 0 | 98.6 | 44.9 | 25 |
| Comparative Example 2 | 1 | 0 | 80.5 | 42.2 | 38 |
| * The second compound in Table 1 is the compound represented by Chemical Formula 2-1-1 above. | | | | | |

The evaluation results on high-temperature charge/discharge properties, high-temperature storage properties, and stability for the rechargeable lithium batteries fabricated according to Examples 8 to 19 and Comparative Examples 1 to 3 are shown in Table 2 below.

Table 2

| | Additive | | 500 cycles, DCIR increase ratio (%, @500) | High-temperature storage DCIR increase ratio (%, @60°C 30 days) | High-temperatur e storage CID open time (hr, @90°C) |
|---|---|---|---|---|---|
| | First compound (wt%) | Second compound * (wt%) | | | |
| Example 8 | 1 | 0.5 | 75.9 | 38.8 | 42 |
| Example 9 | 1 | 1 | 72.2 | 34.2 | 45 |
| Example 10 | 1 | 1.5 | 70.6 | 32.5 | 49 |
| Example 11 | 1 | 2 | 69.1 | 29.8 | 57 |
| Example 12 | 1 | 3 | 64.4 | 26.9 | 67 |

(continued)

| | Additive | | 500 cycles, DCIR increase ratio (%, @500) | High-temperature storage DCIR increase ratio (%, @60°C 30 days) | High-temperatur e storage CID open time (hr, @90°C) |
|---|---|---|---|---|---|
| | First compound (wt%) | Second compound * (wt%) | | | |
| Example 13 | 1 | 5 | 59.6 | 21.9 | 82 |
| Example 14 | 1 | 10 | 46.5 | 13.8 | 94 |
| Example 15 | 1 | 13 | 49.8 | 17.6 | 92 |
| Example 16 | 1 | 15 | 55.1 | 23.3 | 85 |
| Example 17 | 0.5 | 1 | 76.3 | 39.4 | 36 |
| Example 18 | 2 | 1 | 77.9 | 41.5 | 38 |
| Example 19 | 3 | 1 | 78.7 | 43.3 | 42 |
| Comparative Example 1 | 0 | 0 | 98.6 | 44.9 | 25 |
| Comparative Example 2 | 1 | 0 | 80.5 | 42.2 | 38 |
| Comparative Example 3 | 0 | 1 | 79.8 | 41.8 | 36 |
| * The second compound in Table 2 is the compound represented by Chemical Formula 2-1-2 above. | | | | | |

Referring to Tables 1 and 2, it can be found that the charge and discharge properties and storage properties at high temperatures were improved for Examples 1 to 19 compared to Comparative Examples 1 to 3.

Referring to Tables 1 and 2, it can be confirmed that the CID open time was delayed for Examples 1 to 19, which include the second compound, compared to Comparative Examples 1 to 3. That is, it can be found that when the rechargeable lithium batteries according to the example embodiments are left at high temperatures, the reducing or suppressing effect of gas generation may be improved.

By applying an electrolyte solution for a rechargeable lithium battery according to an example embodiment of the disclosure, the increase of battery resistance when stored at high temperatures may be reduced or suppressed, and a rechargeable lithium battery with desired or improved lifetime characteristics and stability may be accomplished.

Although the example embodiments of the present disclosure have been described, it is understood that the present disclosure should not be limited to these example embodiments, but various changes and modifications can be made by one of ordinary skill in the art within the scope of the present disclosure as hereinafter claimed.

## Claims

**1.** An electrolyte solution for a rechargeable lithium battery, the electrolyte solution comprising:

a non-aqueous organic solvent;
a lithium salt;
a first compound represented by Chemical Formula 1; and
a second compound represented by Chemical Formula 2:

Chemical Formula 1

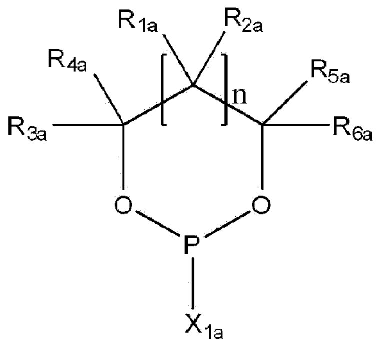

Chemical Formula 2

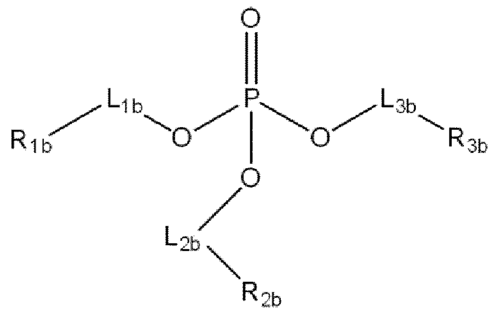

wherein in Chemical Formula 1,
$X_{1a}$ is one of a fluoro group, a chloro group, a bromo group, and an iodo group,
$R_{1a}$ to $R_{6a}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, a substituted or unsubstituted C1 to C10 alkoxy group, and a substituted or unsubstituted C2 to C30 heterocyclic group, and
"n" is an integer of 0 or 1, and
wherein, in Chemical Formula 2,
$L_{1b}$ to $L_{3b}$ are each independently one of a single bond and a substituted or unsubstituted C1 to C10 alkylene group, and
$R_{1b}$ to $R_{3b}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, and a substituted or unsubstituted C2 to C30 heterocyclic group,
wherein "substitution" means that at least one hydrogen is substituted with deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

**2.** The electrolyte solution for a rechargeable lithium battery of claim 1, wherein Chemical Formula 1 is represented by one of Chemical Formula 1-1 and Chemical Formula 1-2:

Chemical Formula 1-1

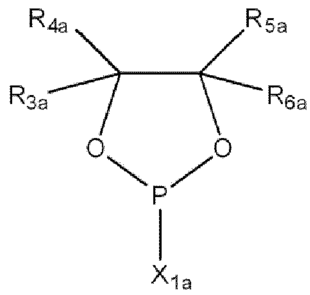

Chemical Formula 1-2

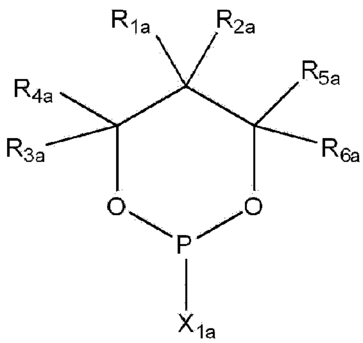

wherein, in Chemical Formula 1-1 and Chemical Formula 1-2,
$X_{1a}$ is one of a fluoro group, a chloro group, a bromo group and an iodo group,
$R_{1a}$ to $R_{6a}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, a substituted or unsubstituted C1 to C10 alkoxy group, and a substituted or unsubstituted C2 to C30 heterocyclic group.

**3.** The electrolyte solution for a rechargeable lithium battery of claim 2, wherein, in Chemical Formula 1-1 and in Chemical Formula 1-2, $R_{1a}$, $R_{2a}$, $R_{3a}$ and $R_{4a}$ are each hydrogen, and at least one of $R_{5a}$ and $R_{6a}$ is one of a substituted or unsubstituted C1 to C10 alkyl group, a substituted or unsubstituted C1 to C10 alkoxy group, a substituted or unsubstituted C2 to C10 alkenyl group, and a substituted or unsubstituted C2 to C10 alkynyl group.

**4.** The electrolyte solution for a rechargeable lithium battery of claim 1, wherein the first compound is one of the compounds listed in Group 1:

Group 1

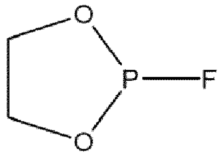

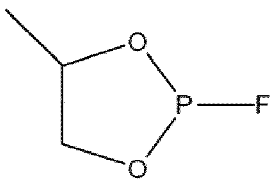

**5.** The electrolyte solution for a rechargeable lithium battery of any one of the preceding claims, wherein the first compound is comprised in 0.01 wt% to 5 wt% based on a total weight of the electrolyte solution.

**6.** The electrolyte solution for a rechargeable lithium battery of any one of the preceding claims, wherein Chemical Formula 2 is represented by Chemical Formula 2-1:

Chemical Formula 2-1

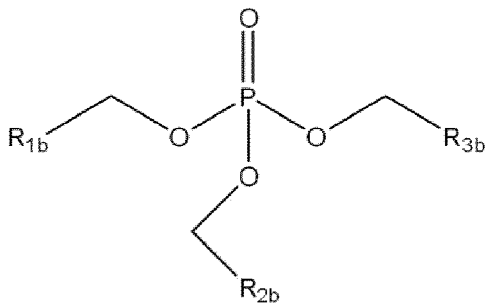

wherein, in Chemical Formula 2-1,
$R_{1b}$ to $R_{3b}$ are each independently one of hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, and a substituted or unsubstituted C2 to C30 heterocyclic group.

**7.** The electrolyte solution for a rechargeable lithium battery of claim 6, wherein, in Chemical Formula 2-1, $R_{1b}$ to $R_{3b}$ are each independently one of a substituted or unsubstituted C2 to C20 alkenyl group, and a substituted or unsubstituted C2 to C20 alkynyl group.

**8.** The electrolyte solution for a rechargeable lithium battery of any one of claims 1 to 5, wherein Chemical Formula 2 is represented by Chemical Formula 2-1-1:

Chemical Formula 2-1-1

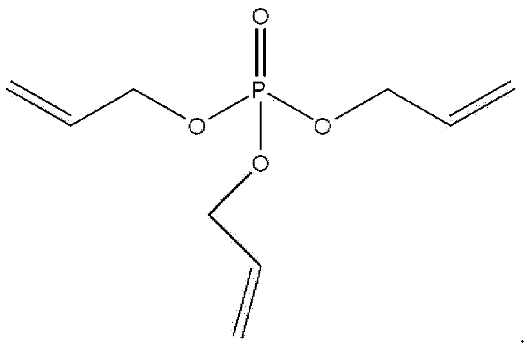

**9.** The electrolyte solution for a rechargeable lithium battery of any one of claim 1 to 5, wherein Chemical Formula 2 is represented by Chemical Formula 2-1-2:

Chemical Formula 2-1-2

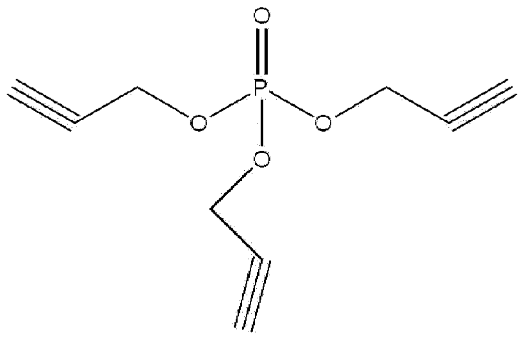

.

**10.** The electrolyte solution for a rechargeable lithium battery of any one of the preceding claims, wherein the second compound is comprised in 0.01 wt% to 20 wt% based on a total weight of the electrolyte solution for a rechargeable lithium battery.

**11.** The electrolyte solution for a rechargeable lithium battery of any one of the preceding claims, wherein the first compound and the second compound are comprised in a weight ratio of 1:0.2 to 1:20.

**12.** The electrolyte solution for a rechargeable lithium battery of claim 11, wherein the first compound and the second compound are comprised in a weight ratio of 1:5 to 1:15.

**13.** The electrolyte solution for a rechargeable lithium battery of any one of the preceding claims, wherein the non-aqueous organic solvent comprises a carbonate-based solvent.

**14.** The electrolyte solution for a rechargeable lithium battery of claim 13, wherein the carbonate-based solvent comprises at least one of ethylene carbonate (EC), methyl ethyl carbonate (MEC), and dimethyl carbonate (DMC).

**15.** The electrolyte solution for a rechargeable lithium battery of any one of the preceding claims, wherein the lithium salt comprises $LiPF_6$.

FIG. 1

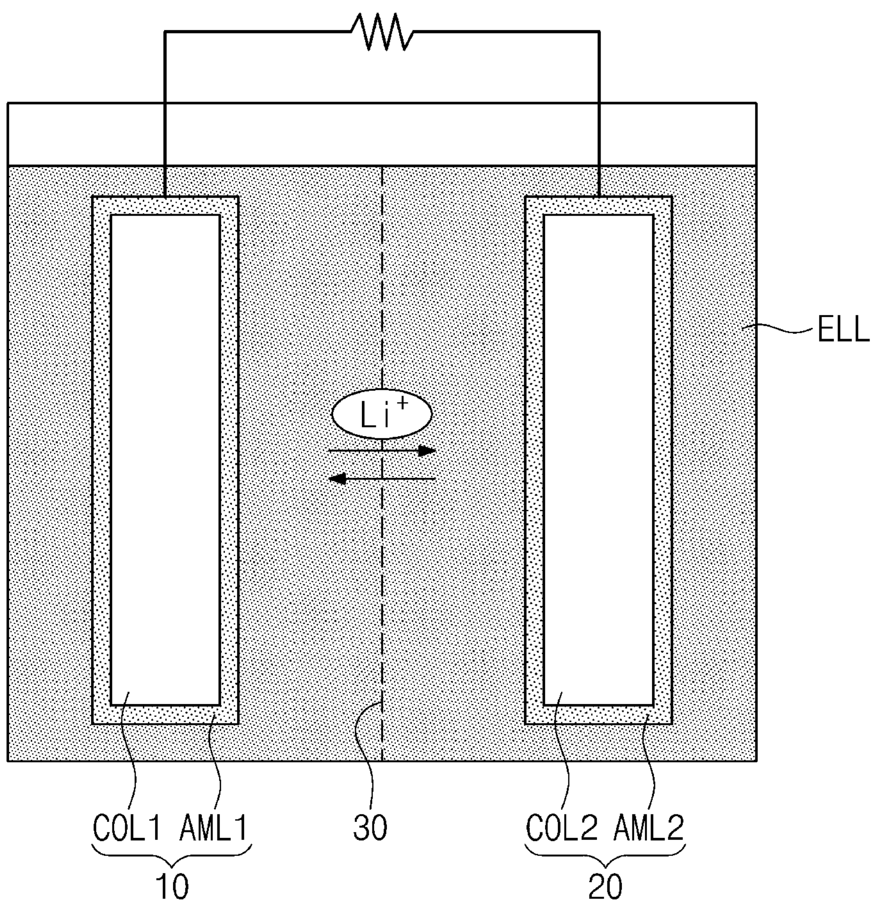

FIG. 2

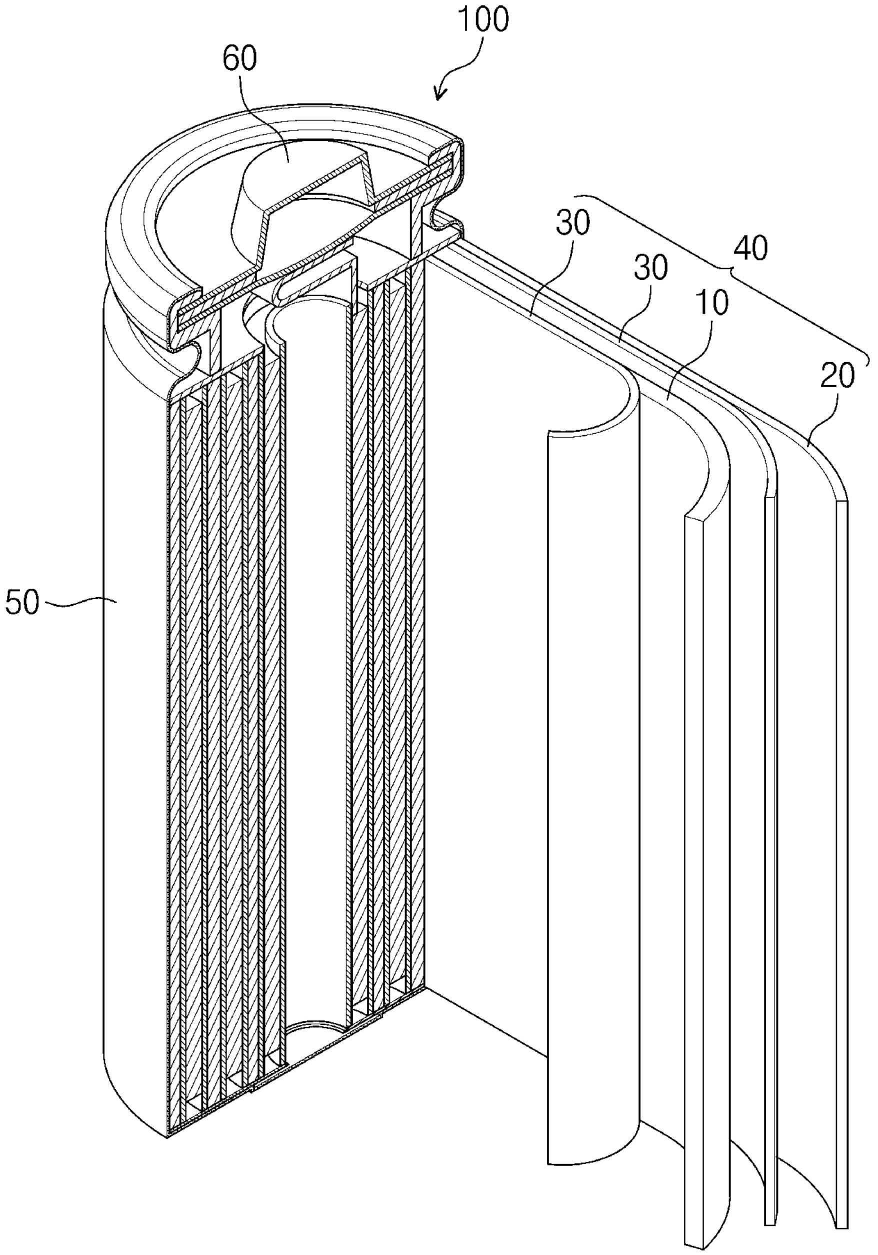

FIG. 3

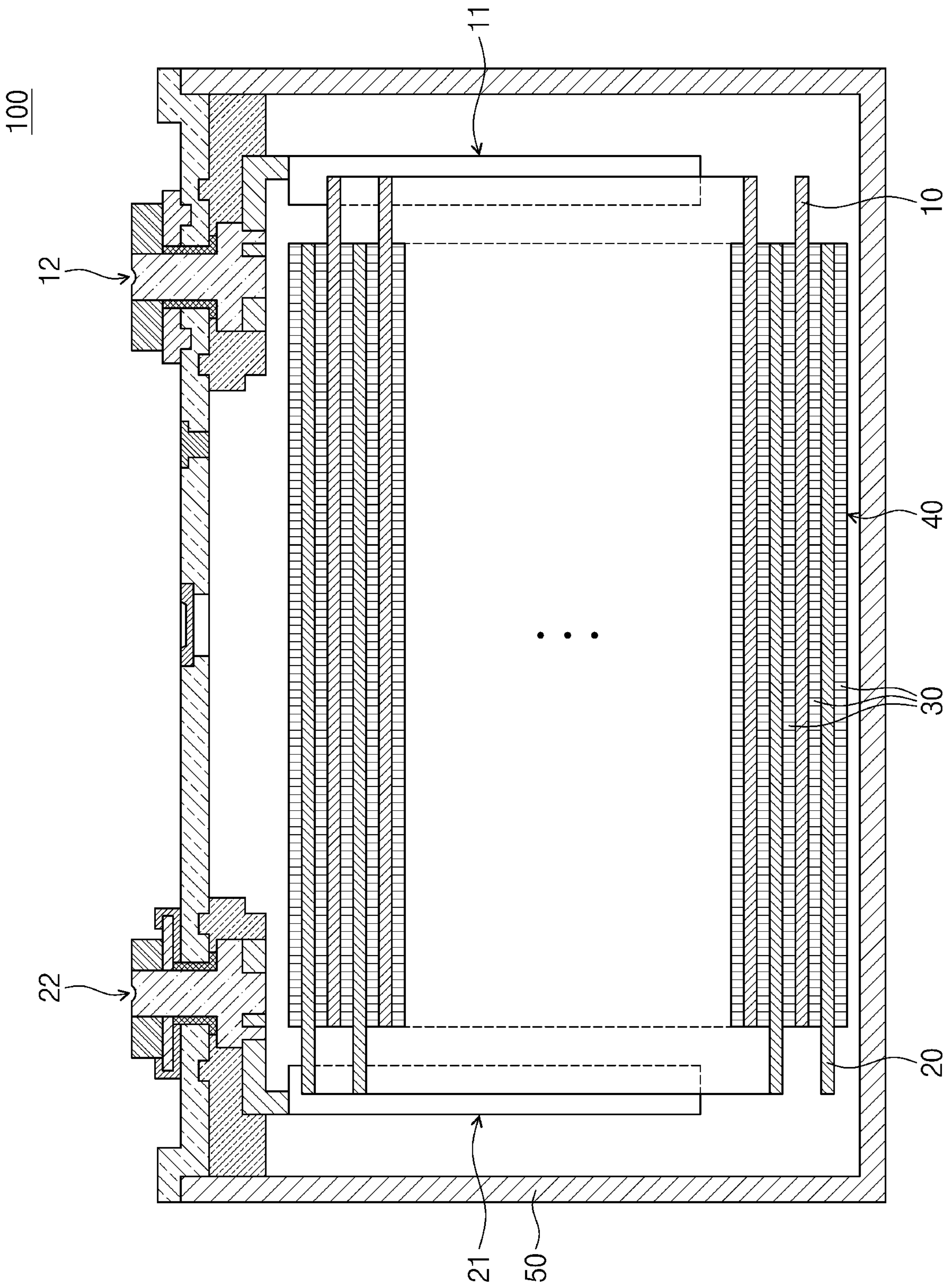

FIG. 4

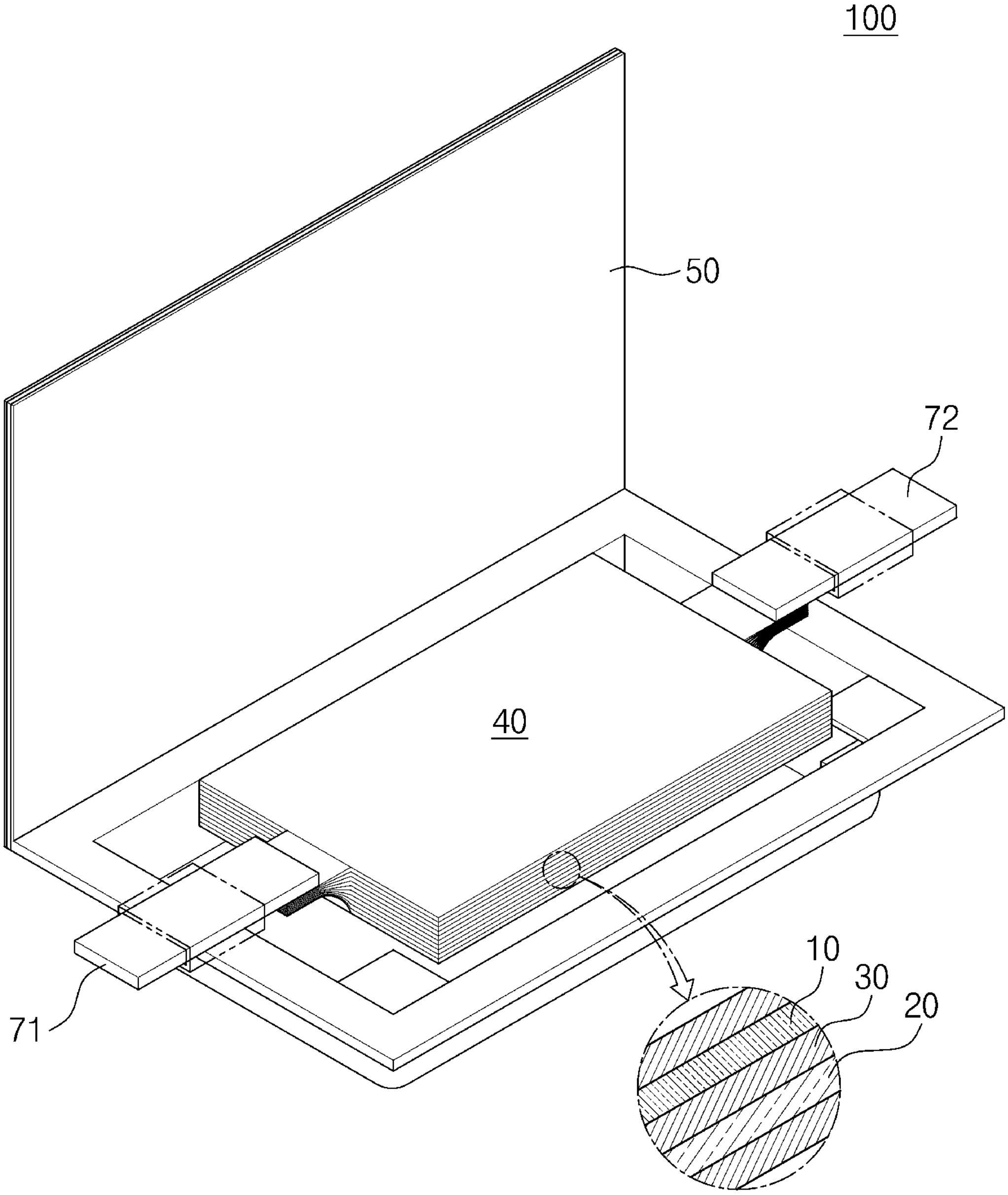

FIG. 5

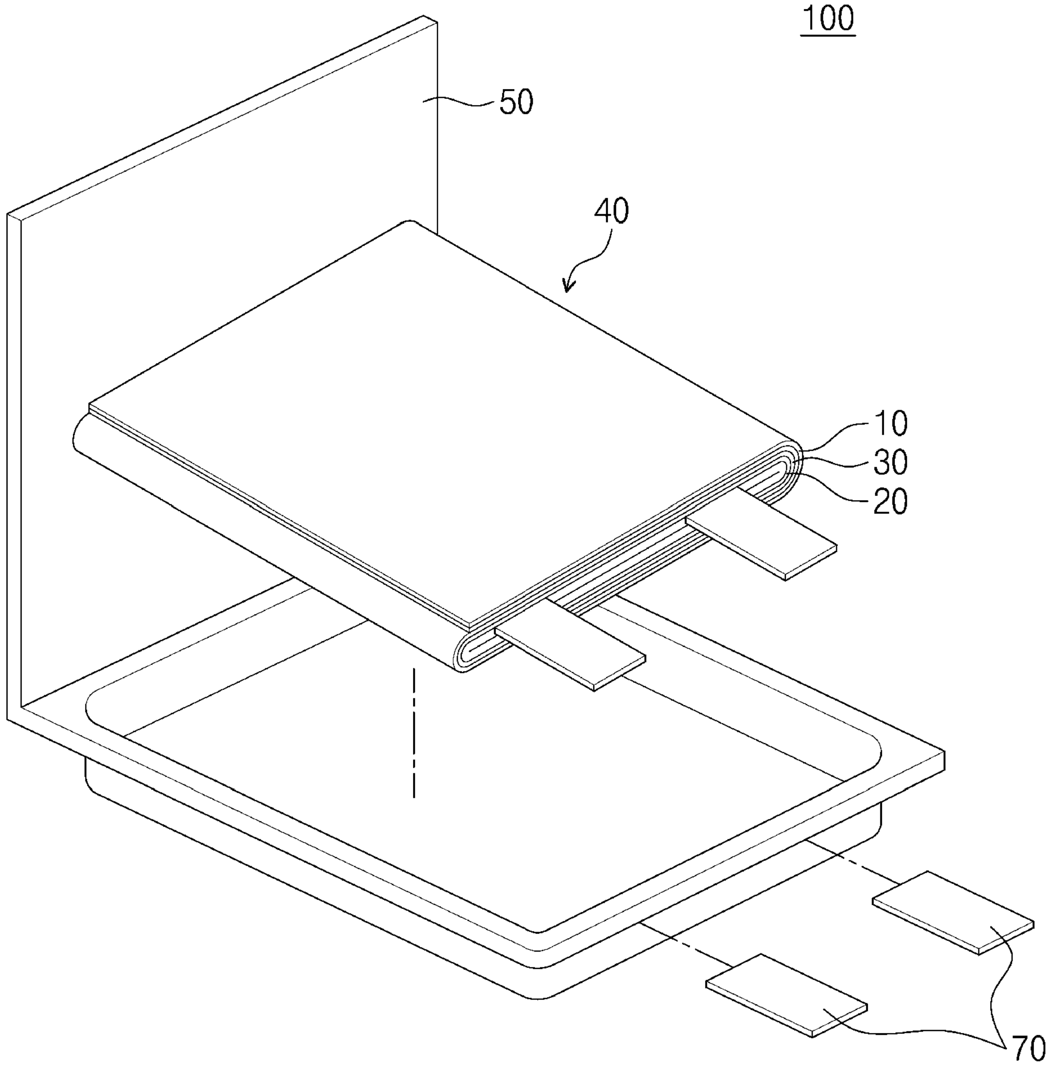

Europäisches Patentamt
European Patent Office
Office européen des brevets

# EUROPEAN SEARCH REPORT

Application Number
EP 25 17 8755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 4 220 803 A1 (SAMSUNG SDI CO LTD [KR]) 2 August 2023 (2023-08-02)<br>* par. 128-141; table 1, examples 4-6, 10-12, 16-18, 22-24, 28-30, 34-36, 40-43; comparative examples 10-12, 16-18 *<br>----- | 1-8, 10-15<br>9 | INV. H01M10/0567 |
| Y | EP 4 270 582 A1 (SOULBRAIN CO LTD [KR]) 1 November 2023 (2023-11-01)<br>* claim 12, compound 7-7 *<br>----- | 9 | |

TECHNICAL FIELDS SEARCHED (IPC)

H01M

The present search report has been drawn up for all claims

1

| Place of search | Date of completion of the search | Examiner |
|---|---|---|
| Munich | 9 October 2025 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 17 8755

This annex lists the patent family members relating to the patent documents cited in the above-mentioned European search report. The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
|---|---|---|---|
| EP 4220803 A1 | 02-08-2023 | CN 116806384 A | 26-09-2023 |
| | | EP 4220803 A1 | 02-08-2023 |
| | | JP 7737464 B2 | 10-09-2025 |
| | | JP 2024503907 A | 29-01-2024 |
| | | KR 20220106579 A | 29-07-2022 |
| | | US 2023307707 A1 | 28-09-2023 |
| | | WO 2022158728 A1 | 28-07-2022 |
| EP 4270582 A1 | 01-11-2023 | EP 4270582 A1 | 01-11-2023 |
| | | US 2024128510 A1 | 18-04-2024 |
| | | WO 2022139534 A1 | 30-06-2022 |

EPO FORM P0459

For more details about this annex : see Official Journal of the European Patent Office, No. 12/82